Europäisches Patentamt

European Patent Office

Office européen des brevets

(19)

(11) Numéro de publication: **0 319 366**
**A1**

(12)

# DEMANDE DE BREVET EUROPEEN

(21) Numéro de dépôt: **88402899.4**

(22) Date de dépôt: **18.11.88**

(51) Int. Cl.⁴: **C 12 H 1/04**
**B 01 D 9/02**

(30) Priorité: **20.11.87 FR 8716077**

(43) Date de publication de la demande:
**07.06.89  Bulletin  89/23**

(84) Etats contractants désignés:
**AT CH DE ES FR GR IT LI LU**

(71) Demandeur: **STATION OENOTECHNIQUE DE CHAMPAGNE (S.A.)**
**79, Avenue A.A. Thévenet**
**F-51318 Magenta  (FR)**

(72) Inventeur: **Esteve, Jean-Louis**
**11, Avenue Foch**
**FR-51200 Epernay  (FR)**

**Hardy, Georges**
**6, Rue Jules Ferry**
**Oiry Fr-51200 Epernay  (FR)**

**Martin, Pierre**
**L'Echelle Reuil**
**FR-51200 Epernay  (FR)**

(74) Mandataire: **Viard, Jean**
**Cabinet VIARD 28 bis, avenue Mozart**
**F-75016 Paris  (FR)**

(54) Cuve de stabilisation du vin par réfrigération.

(57) Selon l'invention, la cuve est séparée en une zone de contact (3) et en une zone de repos (4) séparées par des moyens (20) de sédimentation des microcristaux, l'agitation dans la zone (3) étant réalisée par des pales horizontales (10) à sens de rotation alterné.

Application : élimination efficace du tartre dans le vin.

FIG.1

EP 0 319 366 A1

Bundesdruckerei Berlin

## Description

**Cuve de stabilisation du vin par réfrigération et ensemencement par des cristaux de bitartrate de potassium.**

La présente invention a pour objet une stabilisation du vin par réfrigération.

On connait des cuves de stabilisation du vin par réfrigération, destinées à permettre l'élimination du tartre en continu. Depuis très longtemps, il est connu d'extraire du vin, le bitartrate de potassium résultant du traitement du vin en soumettant celui-ci à une réfrigération qui provoque la formation de cristaux, cette réfrigération étant actuellement coordonnée avec un ensemencement du vin par des cristaux de tartrate ou "crème de tartre", mélangés à du vin. Le vin à traiter est pré-refroidi par un échangeur et introduit dans la cuve où il se produit un refroidissement instantané à une température de l'ordre de -1 à -3°C, le murissement des microcristaux pendant le temps de passage dans la cuve, et enfin une sédimentation de la plus grande partie des cristaux dans la partie inférieure de l'appareil. Un tel dispositif est décrit dans DE-OS-2 640 384, mais le dispositif décrit ne permet pas de travailler en continu. Ainsi pour éliminer le tartre, on commence par ajouter du tartre, ceci afin d'éviter une obstruction trop rapide du filtre extérieur. Puis le vin est pompé, filtré et réchauffé avant son stockage.

On connaît également par FR-A-2 589 163, une cuve de réfrigération dans laquelle un cône de décantation est disposé à l'une des extrémités de la cuve opposée à l'extrémité par laquelle le vin à traiter est introduit. Un volume dont la capacité est d'environ 1/6ème du volume total constitue une zone de repos dans laquelle se dépose le tartre, le volume restant de la cuve étant utilisé pour l'agitation du vin.

L'idée de base de l'invention consiste à utiliser les microcristaux initialement contenus dans le vin à l'état dissous, pour réensemencer en continu le vin, c'est-à-dire pour contribuer à servir de fixation aux autres molécules de tartre, ces microcristaux étant très actifs. Or, on a constaté qu'une agitation trop rapide du vin et la formation de courants de convection s'opposaient à la redescente des microcristaux déposés à la partie supérieure de la cuve vers la partie inférieure de celle-ci constituant un bac de décantation.

La présente invention a pour objet de remédier à ces inconvénients et de permettre une utilisation optimale des microcristaux par leur séparation du vin dans la zone de repos et leur réinjection dans la masse de vin agitée.

Selon la présente invention, la cuve de stabilisation de vins, par réfrigération, et ensemencement du vin à l'aide de cristaux de tartre en continu, comprenant une enceinte réfrigérée, des moyens de circulation et d'agitation du vin, et des moyens de mise en suspension des gros cristaux à la partie inférieure centrale de la cuve, ladite cuve étant subdivisée en deux parties, une zone de contact où s'effectue le refroidissement et une zone de repos située à la pointe supérieure de la cuve, est caractérisée en ce que des moyens de décantation des microcristaux sont disposés à l'extrémité supérieure de la cuve et constituent la séparation entre les deux zones, cette séparation étant balayée par au moins un râcleur qui dirige les microcristaux vers la zone de contact, l'agitation dans la zone de contact étant effectuée dans des plans sensiblement horizontaux.

Selon une autre caractéristique de l'invention, les deux zones sont séparées par un disque présentant des fentes dans lesquelles sont rassemblés les microcristaux.

Dans un autre mode de réalisation, la zone d'agitation est séparée de la zone de sédimentation par des tamis filtrants disposés verticalement, mais dont les entrées se trouvent à un même niveau.

La séparation des deux zones (contact et repos), permettant le passage du vin, mais provoquant l'arrêt des turbulences, est obtenue par la présence d'un disque de décantation qui permet une descente de microcristaux dans la zone de contact.

Dans la zone de contact proprement dite, l'agitation est telle qu'il n'existe plus de courants ascendants, de sorte que la séparation entre les deux zones résulte de l'absence d'agitation dans la zone de repos, et de la barrière physique constituée par le cône décrit dans le brevet précité.

D'autres caractéristiques et avantages de la présente invention apparaîtront au cours de la description qui va suivre de modes de réalisation, donnés uniquement à titre d'exemples non limitatifs, en regard des dessins qui représentent :

- la figure 1, une vue d'une cuve selon le premier mode de réalisation ;
- la figure 2, une vue par-dessus de la même cuve coupée selon la ligne II-II de la figure 1 ;
- la figure 3, une vue d'un second mode de réalisation de la cuve ;
- la figure 4, une vue par-dessus coupée selon la ligne IV-IV de la figure 3 ;
- la figure 5, une vue d'un troisième mode de réalisation à tamis verticaux ;
- la figure 6, une vue par-dessus de la cuve coupée selon la ligne VI-VI de la figure 5.

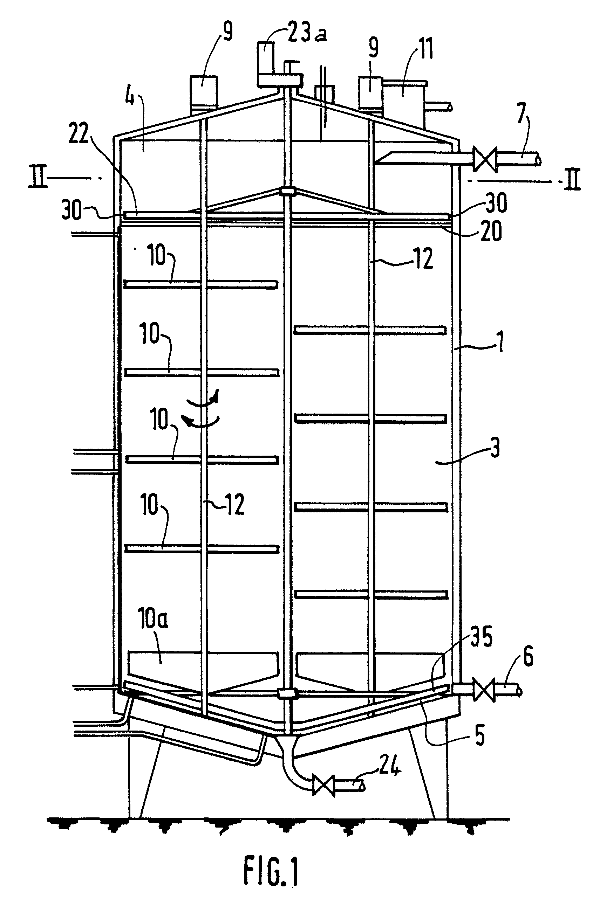

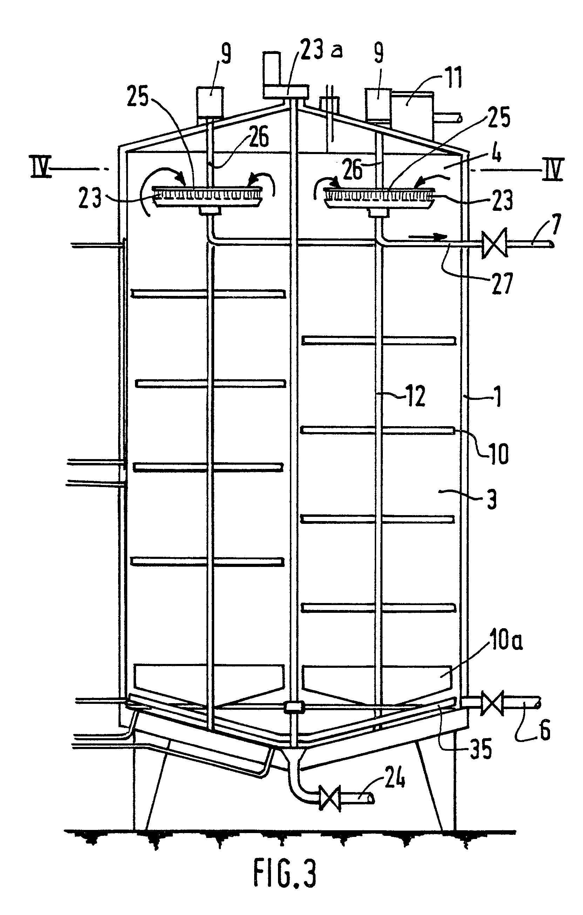

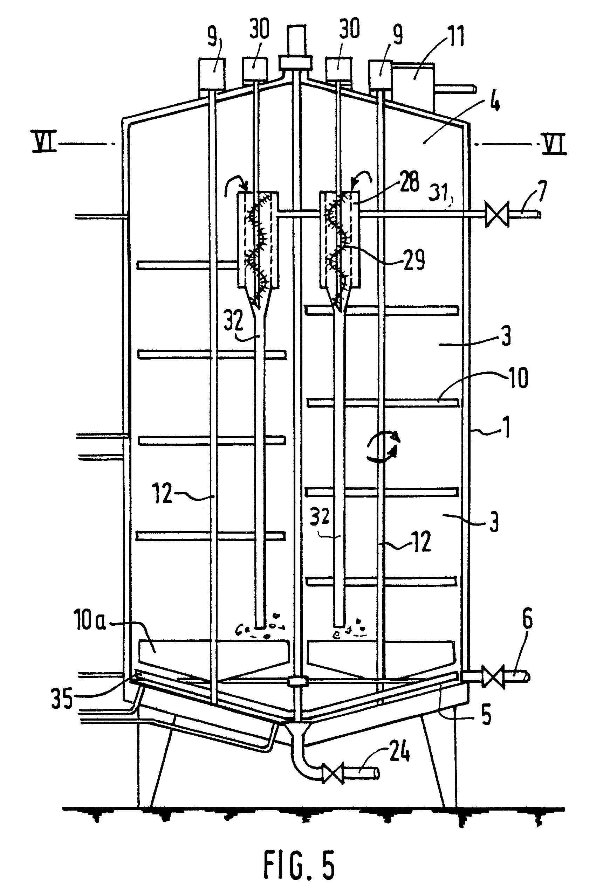

La figure 1 représente en coupe une cuve selon l'invention. La cuve 1 est une cuve isotherme en acier inoxydable, présentant une enveloppe extérieure, une couche d'isolation par exemple en mousse de polyuréthane, et une paroi interne reliée à des moyens de réfrigération (non référencés). Elle est séparée fonctionnellement en deux parties respectivement, 3 et 4, le volume de la zone de repos ou de sédimentation 4 qui n'est pas réfrigérée, étant d'environ 1/6ème de l'ensemble du volume, alors que la partie 3 occupe sensiblement les 5/6ème du volume. La zone 3 est la zone dans laquelle se produit l'agitation du vin et le refroidissement.

Selon une caractéristique de l'invention, cette agitation est effectuée dans des plans horizontaux.

Elle présente à sa partie inférieure, un cône de décantation 5 destiné à recevoir les gros cristaux de tartre et à permettre leur extraction par un embout 24. Un râcleur 35 tournant à faible vitesse, le vin entre avant stabilisation dans la cuve, à la partie inférieure de celle-ci par une canalisation 6, et en est extrait à la partie supérieure par une canalisation 7. La cuve présente à sa partie supérieure un trou d'homme 11. Des moyens d'agitation du vin dans la zone 4 consistent en des palettes 10 entraînées dans des plans horizontaux sur des axes 12 eux-mêmes entraînés par des moteurs 9. Les palettes inférieures 10a présentent des ailettes verticales comme représenté sur les figures, afin de réintroduire les "gros" cristaux qui sont descendus dans le fond de la cuve dans la masse du vin agité. Les agitateurs peuvent être, par exemple, au nombre de un, deux, ou quatre, seuls deux de ceux-ci apparaissant sur la figure 1. Ils sont à sens alterné.

La cuve est, bien entendu, reliée à un circuit (non représenté), comprenant un échangeur à plaques, un filtre à Kieselguhr, un dispositif d'injection de la crème de tartre, et un dispositif de contrôle en continu de l'efficacité.

Les deux zones 3 et 4 sont séparées, dans un premier mode de réalisation, par un disque de sédimentation 20 dont les dimensions sont telles que le vin puisse passer à la périphérie du disque par la couronne annulaire 30, pour entrer dans la zone de repos 4. Dans cette zone de repos il n'existe aucune agitation, de sorte que, par gravité, les microcristaux se déposent sur le disque 20. Le disque 20 comprend un certain nombre de fentes 21 dans lesquelles les microcristaux sont rassemblés et redescendent dans la zone 3 d'agitation, de manière à venir ensemencer à nouveau le vin présent dans la zone 3. De préférence, le passage d'une zone à une autre est réalisé par l'existence d'un ou plusieurs râcleurs 22 qui est entraîné en rotation à faible vitesse (par exemple 0,2 tours/minute), ce râcleur exerçant une pression sur les microcristaux pour que ceux-ci entrent dans les fentes 21. Le râcleur 22 est entraîné en rotation par exemple par un moteur 23a. Le disque 20 en acier inoxydable, permet de rendre la zone supérieure exempte de tout remous et de la séparer de la zone inférieure à forte agitation, pour limiter au maximum la sortie du bitartrate par la canalisation 7, ce qui obstruerait rapidement le filtre principal extérieur. Le disque 20 peut être remplacé par un filtre à surface balayée pour une récupération des cristaux de tartre de dimensions supérieures ou égales à 10 microns. Bien entendu, la récupération des gros cristaux de tartrate à la partie inférieure de la cuve évite, elle aussi, une obstruction trop rapide du filtre Kieselguhr.

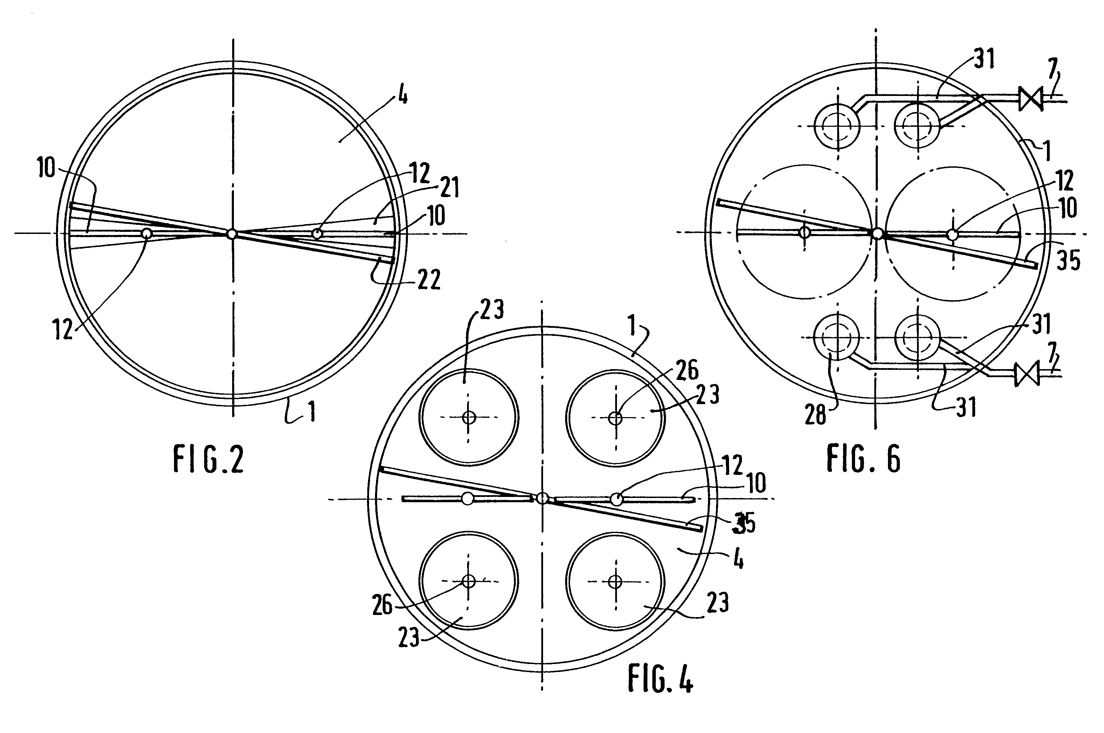

Dans le second mode de réalisation, représenté sur les figures 3 et 4, le disque 20 a été remplacé par quatre filtres 23 balayés par des râcleurs 25. L'évacuation du vin par la canalisation 7 est obtenue au moyen de conduits 27 débouchant au-dessous des filtres 23 et raccordés à la canalisation de sortie 7. Le dispositif d'agitation est le même que précédemment, c'est-à-dire qu'il évite par des mouvements alternatifs des palettes 10, de créer des mouvements de circulation ascendants ou descendants permanents. Ainsi, les couches de vin entrant successivement sont en quelque sorte stratifiées et non mélangées entre elles.

L'agitation obtenue est telle que tout le vin reste en contact avec le tartre pendant le temps voulu, le volume de la partie "contact" 3 étant égal à environ deux fois le débit horaire (ou plus, suivant les application). Le dispositif d'agitation alternatif assure les convections nécessaires au refroidissement du vin par les parois réfrigérantes de la cuve 1. Elle assure également les convections nécessaires au brassage du vin avec les cristaux introduits au démarrage du traitement (procédé contact) et ceux induits spontanément par le refroidissement.

Grâce au râcleur bas 35, les gros cristaux, déjà sédimentés, sont ramenés à proximité de l'agitateur qui les mélange au vin pour offrir un contact maximum. Les pâles du râcleur brisent les cristaux devenus gros, selon une granulométrie d'environ 100 microns, et créent de nouveaux cristaux utiles qui sont dirigés vers la zone de contact 3 par les râcleurs. La sursaturation en cristaux renforce l'efficacité du traitement. On distingue sur la figure 4, le râcleur du fond 35 qui est animé à une vitesse lente d'environ 0,2 tour/minute.

Les figures 5 et 6 représentent un autre mode de réalisation, dans lequel le disque de sédimentation a été remplacé par des tamis filtrants verticaux 28. A l'intérieur des filtres 28 tournent des brosses 29 de forme hélicoïdale, poussant le filtrat vers le bas. Les filtres proprement dits, sont constitués par une toile métallique ou textile. Les brosses hélicoïdales sont entraînées à faible vitesse par des moteurs 30 comme celà apparaît sur la figure 5. Les parties externes des filtres 28 sont connectées deux à deux par un conduit 31 sur la canalisation 7. L'intérieur des filtres 28 correspond avec des conduits verticaux 32 qui permettent d'acheminer les microcristaux dans le bas de la cuve 1 où ils réensemencent le vin.

Le fonctionnement commun aux trois dispositifs qui viennent d'être décrits est le suivant : le vin à traiter est pompé dans la cuve de stockage 1, après avoir été pré-refroidi dans un échangeur non représenté. Un dispositif d'ajout de crème de tartre permet un dosage programmé dans le vin qui arrive dans la cuve où sont réalisées les opérations mentionnées précédemment. La veille du démarrage du procédé en continu, la cuve est remplie de vin et mise à refroidissement à -3°C. Un ajout de crème de tartre (environ 4 g par litre) est réalisé.

Après une agitation de quatre heures, l'appareil peut fonctionner en continu. Le vin à traiter est pompé à la température de la cuverie et refoulé vers l'échangeur à plaques dans lequel il passe d'une température de 7 - 10°C à -1 -2°C par exemple. La crème de tartre est injectée directement dans la veine de vin qui pénètre dans la partie basse de la cuve de traitement par l'embout 6. Le vin est mélangé par le système d'agitation décrit précédemment, et au terme de deux heures de contact par exemple, le vin dont le bitartrate a été précipité, passe dans la partie supérieure exempte de tout remous. Les microcristaux sont alors extraits du vin comme indiqué précédemment, et le vin filtré est renvoyé dans la cuverie à travers l'échangeur à plaques. Les cristaux "pollués" sont évacués par la vanne de fond de cuve 24.

Une régénération complète avec nettoyage de la cuve est nécessaire par période de 8 jours environ, et à la sortie de l'échangeur à plaques, une sonde permet de vérifier en continu l'efficacité du traitement. Il est donc ainsi possible d'agir directement sur le processus en fonction du résultat de stabilisation, soit par modification des débits, soit par modification de l'introduction de crème de tartre.

**Revendications**

1. Cuve de stabilisation de vins par réfrigération et ensemencement en continu du vin par des cristaux de bitartrate de potassium comprenant, une zone de contact (4) et une zone de repos (3), le vin étant introduit à la partie inférieure (6) de la cuve et extrait à la partie supérieure (7), caractérisée en ce qu'elle comprend des moyens de décantation des microcristaux disposés à la partie supérieure de la cuve pour constituer la séparation entre les zones (3) et (4), ces moyens étant balayés par au moins un râcleur (22, 25, 29), qui dirige les microcristaux vers la zone de contact (3), l'agitation dans la cuve étant obtenue par des pales horizontales (10, 10a) à sens de rotation alterné.

2. Cuve selon la revendication 1, caractérisée en ce que la surface de séparation est constituée par un disque (20) percé de fentes (21), la surface supérieure du disque étant balayée par un râcleur (22) à faible vitesse.

3. Cuve selon la revendication 1, caractérisée en ce que la surface de séparation est constituée par au moins un tamis balayé (23) dont la face inférieure est reliée à la canalisation (7) de sortie du vin.

4. Cuve selon la revendication 1, caractérisée en ce que la surface de séparation est constituée par l'entrée de tamis verticaux (28) dont les deux côtés sont reliés d'une part à des conduits verticaux (32) de descente de microcristaux à l'intérieur de la zone (4) et, d'autre part, à des canalisations (31) reliées à la sortie (7) du vin, l'intérieur des filtres (23) étant balayé par des râcleurs (29).

5. Cuve selon l'une quelconque des revendications précédentes, caractérisée en ce que le fond conique (5) de la cuve (1) est balayé par un râcleur (35), les gros cristaux pouvant être extraits par une canalisation (24).

FIG.1

FIG.3

FIG. 5

FIG. 6

FIG. 4

FIG.2

Office européen
des brevets

**RAPPORT DE RECHERCHE EUROPEENNE**

Numero de la demande

EP 88 40 2899

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 517 874  (ENZINGER UNION WERKE) <br> * Page 1, lignes 1-4; page 5, ligne 21 - page 6, ligne 4; revendications 1,4,5; figure * <br> --- | 1-4 | C 12 H   1/04 <br> B 01 D   9/02 |
| A,D | FR-A-2 589 163  (STATION OENOTECHNIQUE DE CHAMPAGNE) <br> * Figures 1,3; revendications * <br> --- | 1 | |
| A,D | FR-A-2 364 270  (HENKELL) <br> * Revendications 1,4,16,17,18,20; figure 4; page 10, lignes 5-30 * <br> --- | 1-3 | |
| A | US-A-2 065 836  (P.M. THAYER) <br> * Page 2, colonne 1, ligne 54 - colonne 2, ligne 47; figures * <br> ----- | 1-5 | |

|  |  |  | DOMAINES TECHNIQUES RECHERCHES (Int. Cl.4) |
|---|---|---|---|
|  |  |  | C 12 H <br> C 12 G <br> B 01 D |

**Le présent rapport a été établi pour toutes les revendications**

| Lieu de la recherche | Date d'achèvement de la recherche | Examinateur |
|---|---|---|
| LA HAYE | 28-02-1989 | EPAILLARD P.J.H.M. |